# EUROPEAN PATENT SPECIFICATION

(11) **EP 1 514 168 B1**
(45) Date of publication and mention of the grant of the patent: **18.10.2017**
(21) Application number: 02749226.3
(22) Date of filing: 23.07.2002
(51) Int. Cl.: G06F 1/32, H04W 52/02

(54) **TOUCH-ENTRY USER INPUT DEVICE**
BERÜHRUNGSEINGABE-BENUTZEREINGABEGERÄT
DISPOSITIF DE SAISIE UTILISATEUR A CLAVIER

(30) Priority: 18.06.2002 GB 0213973
(43) Date of publication of application: 16.03.2005
(73) Proprietor: Nokia Technologies Oy, 02610 Espoo (FI)
(72) Inventor: BUSSE, Thomas, 44577 Castrop-Rauxel, (DE)
(74) Representative: Higgin, Paul
(86) International application number: PCT/IB2002/002985
(87) International publication number: WO 2003/107166

(56) References cited:
- EP-A2- 1 199 879
- GB-A- 1 320 895
- US-A- 5 805 084
- BANTZ D. ET AL.: 'Keyboard device for upper and lower case keying without shifting' IBM TECHNICAL DISCLOSURE BULLETIN vol. 21, no. 9, February 1979, pages 3845 - 3846, XP002176820

## Description

The present invention relates to a touch entry user input device. It particularly relates to a touch entry user input device located remotely from the device to which input is supplied.

Currently mobile phones have an integrated touch-entry user input, such as a keypad. A key of the keypad may have a different function depending upon the manner in which it is actuated. For example, when the phone is being used for text entry a single actuation of a key can produce a particular character and the repeated actuation of the key in rapid succession can produce different characters. Also, when the phone is in idle mode, the actuation of a key by depressing and releasing the key produces a numeric character as part of a telephone number to be dialled and the actuation of the same key by depressing the key for a duration exceeding about 1 second and then releasing it instructs the phone to dial a stored number. This is called "one-touch" dialling.

The Bluetooth (Trademark) standard describes how low power radio transceivers can be used to remotely communicate over a range of tens of metres. These low power transceiver devices are already present in some mobile phones and can be used to allow a user input (e.g. a cordless headset) to be used remotely from the mobile phone. Communication between the headset and the phone occurs between a low power radio transceiver in the headset and the low power radio transceiver in the phone. A particular advantage of Bluetooth transceivers in mobile applications is that they have energy conservation modes which prolong battery life.

EP 1,199,874 discloses an apparatus such as a fax machine which has a power saving mode of operation. The power saving mode of operation may be exited in response to any one of a number of different inputs including a key input, an incoming call or the handset being placed off-hook.

It would be desirable to improve existing user input devices, in particular, touch-entry input devices comprising Bluetooth transceivers.

According to one aspect of the present invention there is provided a touch-entry user input device having a first mode in which the device does not perform a first function and a second mode in which the device does perform the first function wherein the device has means for user input and is arranged, when in the first mode, to initiate exit from the first mode and entry into the second mode at the initiation of a user input wherein the exit from the first mode occurs before discrimination of the user input.

According to another aspect of the present invention there is provided a method of transferring a user input device in response to user input from a first mode in which the device is not capable of performing a first function to a second mode in which the device is capable of performing a first function where there is an inherent delay in the transfer process, comprising the steps of: detecting the initiation of user input and then immediately initiating the transfer discriminating the user input after the transfer from the first mode to the second mode has been initiated.

For a better understanding of the present invention reference will now be made by way of example only to the drawings in which:
Figure 1 illustrates a touch-entry user input device 2 according to one embodiment of the present invention and
Figure 2 illustrates timing.

According to the Bluetooth Standard, transceiver devices communicate by forming a piconet. A transceiver device can operate as either a Master or a Slave. When operating as a Master, the transceiver controls the piconet and the timing of the piconet is synchronised to the timing of the Master. Communication in the piconet occurs using packets in a time divided manner with only one device transmitting in any one time slot. The time slot is 625 microseconds duration. The Master assigns an Active Member Address AM_ADDR to each Slave participating in the piconet and transmits to and receives from any one of the participating Slave devices using the appropriate AM_ADDR. It can transmit in the even time slots and can receive in the odd time slots. When operating as a Slave, the transceiver can communicate with only the Master of the piconet. It receives in one slot and transmits in the next slot.

When a Slave is in the Active Mode, it is participating in the piconet. It has an AM_ADDR and keeps synchronised to the Master. It continually listens to receive packets addressed to it. It can transmit packets to the Master.

The inventor has developed an effective yet simple solution to the problem of a long variable delay. The delay D is made less than the threshold and a decision to exit the Sniff/Park Mode and enter the Active Mode is made before the keystroke input has been discriminated. The threshold is typically 0.8 seconds and the delay D is made less than this, for example, by setting Tsniff and the 'park interval' to less than 0.8 seconds and preferably 0.5 seconds. Preferably, the decision to exit the Sniff/Park Mode and enter the Active Mode is made at the beginning of the keystroke and the Active Mode is entered before the user input has been discriminated.

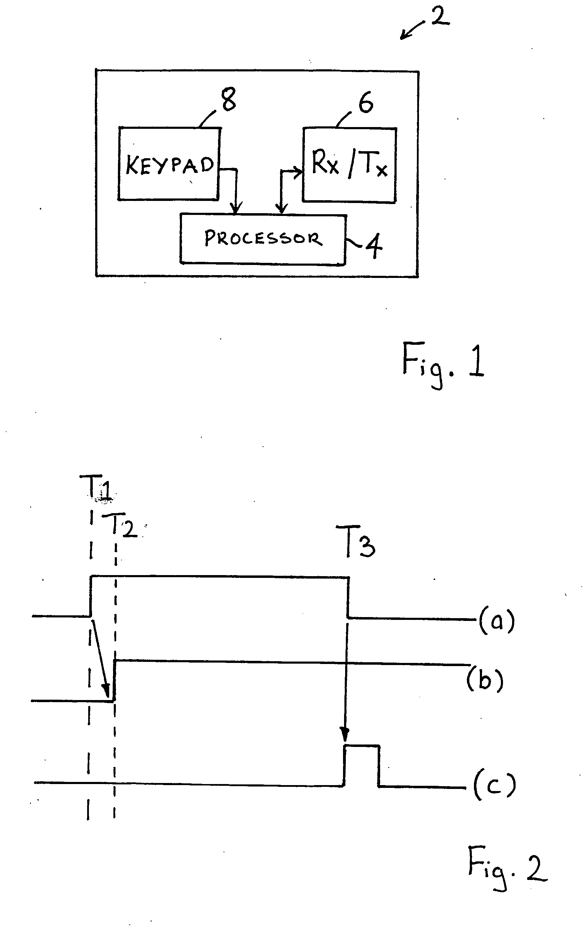

Figure 1 illustrates a touch-entry user input device 2 according to one embodiment of the present invention. The touch-entry user input device 2 comprises a processor 4 connected to a low power radio transceiver 6 which communicates in accordance with the Bluetooth Standard, and to a keypad 8 of user depressible keys. The touch-entry user input device 2 operates as a Slave or a Master in a Bluetooth piconet. The user can input data or commands using keystrokes on the keypad 8. The processor 4 detects and identifies each keystroke and controls the low power radio transceiver to send a radio packet comprising data identifying a keystroke to a remote device (not shown).

The touch-entry user input device 2 has a first operational mode (an energy conservation mode) in which the low power radio transceiver 6 is in the Sniff Mode or the Park Mode and is not readily capable of transmitting keystroke data. The touch-entry user input device 2 has a second operational mode (a radio communication mode) in which the low power radio transceiver is in the Active Mode and is readily capable of transmitting keystroke data.

The interval in the Park Mode is 0.5 seconds and Tsniff is 0.5 seconds.

The processor 4 is programmed to detect, when the device is in the first mode, the initiation (as opposed to completion) of a user input keystroke. The detection of the keystroke occurs at the same time irrespective of whether the keystroke is an instantaneous depression of a key, a continuous depression of a key or a repetitive depression of a key. When the processor 4 detects the initiation of a keystroke it automatically and immediately initiates the exit from the first mode and entry into the second mode. The processor 4 initiates the exit by instructing low power radio transceiver 6 to exit the Sniff Mode or Park Mode. The low power transceiver 6 exits the Sniff Mode by transmitting a LMP_unsniff_req message and receiving a LMP_unsniff_accepted message from the Master in reply and data can be transmitted immediately. The low power transceiver 6 exits the Park Mode by receiving a LMP_unpark_BD_ADDR_req or LMP_unpark_PM_ADDR_req message from the Master. This provides an AM_ADDR to the slave. The slave replies by transmitting a LMP_accepted message to the Master and the Park Mode is exited.

The processor 4 is also programmed to discriminate between an instantaneous depression of a key, a continuous depression of a key and a repetitive depression of a key. A continuous depression is one lasting more than a threshold, for example 0.8 seconds. Once the keystroke has been discriminated, the processor instructs the low power radio transceiver to send a message identifying the keystroke. If the device is in the first mode when a keystroke is made, the initiation of the exit from the first mode is completed before discrimination of the user input. Preferably, the entrance into the second mode has been completed before the discrimination of the user input. Thus once the keystroke has been discriminated the message identifying it may be sent immediately

Figure 2 illustrates the timing. The trace (a) illustrates the timing of the depression of a key. The key is depressed for time t (t=T3-T1). The trace (b) illustrates the timing of the Active Mode. The trace (c) illustrates the timing of keystroke message transmissions. At time T1, the user starts to press the key. At time T2, the touch-entry user input device 2 enters the Active Mode. At time T3 the user input keystroke ends and is discriminated and a message identifying the keystroke is sent. Therefore the reaction times when using a remote touch-entry user input device are reduced. Furthermore, the time at which the message containing the keystroke is sent does not vary.

Although the invention has been described in the preceding paragraphs with reference to various examples, it should be appreciated that modifications and variations to the examples given can be made without departing from the scope of the invention as claimed.

## Claims

1. A touch-entry user input device (2) having a first mode in which the device (2) does not perform a first function and a second mode in which the device (2) does perform the first function wherein the device (2) has means (8) for user input and is arranged, when in the first mode, to initiate exit from the first mode and entry into the second mode at the initiation of a user input wherein the exit from the first mode occurs before discrimination of the user input.

2. A touch-entry user input device (2) as claimed in claim 1 comprising detection means (4) for detecting the initiation of a user input and control means (4) for initiating the exit from the first mode.

3. A touch-entry user input device (2) as claimed in claim 1 or 2 wherein the first mode is an energy conservation mode.

4. A touch-entry user input device (2) as claimed in claim 1, 2 or 3 wherein the second mode is a low power radio communication mode.

5. A touch-entry user input device (2) as claimed in any preceding claim wherein the means (8) for user input comprises a user depressible key.

6. A touch-entry user input device (2) as claimed in claim 5 comprising discrimination means (4) for discriminating an instantaneous depression of the key from a continuous depression of the key.

7. A touch-entry user input device (2) as claimed in claim 5 comprising discrimination means (4) for discriminating an instantaneous depression of the key from a repetitive depression of the key.

8. A touch-entry user input device (2) as claimed in any preceding claim wherein the entry into the second mode occurs before discrimination of the user input.

9. A touch-entry user input device (2) as claimed in any preceding claim further comprising low power radio transceiver means (6) and wherein the exit from the first mode is initiated by sending a message using the low power radio transceiver means (6).

10. A touch-entry user input device (2) as claimed in any preceding claim further comprising low power radio transceiver means (6) wherein the first function comprises transmitting data using the low power radio transceiver means (6).

11. A touch-entry user input device (2) as claimed in any preceding claim operating as a Slave in a Bluetooth piconet.

12. A touch-entry user input device (2) as claimed in any preceding claim operating in accordance with the Bluetooth Standard wherein the first mode is the Sniff Mode or Park Mode

13. A touch-entry user input device (2) as claimed in claim 12 wherein the exit from the Sniff Mode is initiated by transmitting a LMP_unsniff_req message.

14. A touch-entry user input device (2) as claimed in claim 12 or 13 wherein the exit from the Park Mode is initiated by transmitting a LMP_accepted message.

15. A touch-entry user input device (2) as claimed in any preceding claim operating in accordance with the Bluetooth Standard wherein the second mode is the Active Mode.

16. A touch-entry user input device (2) as claimed in any preceding claim wherein the time taken to exit from the first mode and enter into the second mode is less than the time taken to discriminate a user input.

17. A method of transferring a user input device (2), in response to user input, from a first mode in which the device (2) is not capable of performing a first function to a second mode in which the device (2) is capable of performing a first function where there is an inherent delay in the transfer process, comprising the steps of:
detecting the initiation of user input and then immediately initiating the transfer, discriminating the user input after the transfer from the first mode to the second mode has been initiated.

18. A method as claimed in claim 17, wherein user input is performed by depressing a user depressible key.

19. A method as claimed in claim 18, further comprising the step of discriminating an instantaneous depression of the key from a continuous depression of the key.

20. A method as claimed in claim 18, further comprising the step of discriminating an instantaneous depression of the key from a repetitive depression of the key.

## Patentansprüche

1. Benutzereingabegerät mit Berührungseingabe (2), das einen ersten Modus, in dem das Gerät (2) eine erste Funktion nicht ausführt, und einen zweiten Modus aufweist, in dem das Gerät (2) eine erste Funktion ausführt, wobei das Gerät (2) ein Element für die Benutzereingabe (8) aufweist und in der Lage ist, wenn es sich in dem ersten Modus befindet, bei dem Beginn einer Benutzereingabe einen Ausgang aus dem ersten Modus und einen Eingang in den zweiten Modus zu initiieren, wobei der Ausgang aus dem ersten Modus vor der Diskriminierung der Benutzereingabe auftritt.

2. Benutzereingabegerät mit Berührungseingabe (2) nach Anspruch 1, das ein Erkennungselement (4) zum Erkennen des Beginns einer Benutzereingabe und ein Steuerelement (4) zum Initiieren des Ausgangs aus dem ersten Modus umfasst.

3. Benutzereingabegerät mit Berührungseingabe (2) nach Anspruch 1 oder 2, wobei der erste Modus ein Energiesparmodus ist.

4. Benutzereingabegerät mit Berührungseingabe (2) nach Anspruch 1, 2 oder 3, wobei der zweite Modus ein Funkkommunikationsmodus mit niedrigem Energieverbrauch ist.

5. Benutzereingabegerät mit Berührungseingabe (2) nach einem der vorangehenden Ansprüche, wobei das Element für die Benutzereingabe (8) ein von einem Benutzer drückbare Taste umfasst.

6. Benutzereingabegerät mit Berührungseingabe (2) nach Anspruch 5, das ein Diskriminierungselement (4) zum Diskriminieren eines spontanen Drückens der Taste von einem andauernden Drücken der Taste umfasst.

7. Benutzereingabegerät mit Berührungseingabe (2) nach Anspruch 5, das ein Diskriminierungselement (4) zum Diskriminieren eines spontanen Drückens der Taste von einem wiederholten Drücken der Taste umfasst.

8. Benutzereingabegerät mit Berührungseingabe (2) nach einem der vorangehenden Ansprüche, wobei der Eingang in den zweiten Modus vor der Diskriminierung der Benutzereingabe auftritt.

9. Benutzereingabegerät mit Berührungseingabe (2) nach einem der vorangehenden Ansprüche, das außerdem ein Funk-Transceiver-Element mit niedrigem Energieverbrauch (6) umfasst, und wobei der Ausgang aus dem ersten Modus initiiert wird, indem eine Nachricht mithilfe des Funk-Transceiver-Elements mit niedrigem Energieverbrauch (6) gesendet wird.

10. Benutzereingabegerät mit Berührungseingabe (2) nach einem der vorangehenden Ansprüche, das außerdem ein Funk-Transceiver-Element mit niedrigem Energieverbrauch (6) umfasst, wobei die erste Funktion ein Übertragen von Daten mithilfe des Funk-Transceiver-Elements mit niedrigem Energieverbrauch (6) umfasst.

11. Benutzereingabegerät mit Berührungseingabe (2) nach einem der vorangehenden Ansprüche, das als ein Slave in einem Bluetooth-Pikonetz betrieben wird.

12. Benutzereingabegerät mit Berührungseingabe (2) nach einem der vorangehenden Ansprüche, das gemäß dem Bluetooth-Standard betrieben wird, wobei der erste Modus der Schnuppermodus oder Parkmodus ist.

13. Benutzereingabegerät mit Berührungseingabe (2) nach Anspruch 12, wobei der Ausgang aus dem Schnuppermodus initiiert wird, indem eine LMP_unsniff_req-Nachricht übertragen wird.

14. Benutzereingabegerät mit Berührungseingabe (2) nach Anspruch 12 oder 13, wobei der Ausgang aus dem Parkmodus initiiert wird, indem eine LMP_accepted-Nachricht übertragen wird.

15. Benutzereingabegerät mit Berührungseingabe (2) nach einem der vorangehenden Ansprüche, das gemäß dem Bluetooth-Standard betrieben wird, wobei der zweite Modus der aktive Modus ist.

16. Benutzereingabegerät mit Berührungseingabe (2) nach einem der vorangehenden Ansprüche, wobei die Zeit, die benötigt wird, um den ersten Modus zu verlassen und in den zweiten Modus einzutreten, kürzer ist als die Zeit, die benötigt wird, um die Benutzereingabe zu diskriminieren.

17. Verfahren zum Überführen eines Benutzereingabegeräts (2) als Reaktion auf eine Benutzereingabe aus einem ersten Modus, in dem das Gerät (2) nicht in der Lage ist, eine erste Funktion auszuführen, in einen zweiten Modus, in dem das Gerät (2) in der Lage ist, die erste Funktion auszuführen, wobei der Überführungsprozess eine innewohnende Verzögerung aufweist und die folgenden Schritte umfasst:
Erkennen des Beginns der Benutzereingabe und danach sofortiges Initiieren der Überführung, und Diskriminieren der Benutzereingabe, nachdem die Überführung aus dem ersten Modus in den zweiten Modus initiiert wurde.

18. Verfahren nach Anspruch 17, wobei die Benutzereingabe ausgeführt wird, indem eine drückbare Taste gedrückt wird.

19. Verfahren nach Anspruch 18, das außerdem den Schritt eines Diskriminierens eines spontanen Drückens der Taste von einem andauernden Drücken der Taste umfasst.

20. Verfahren nach Anspruch 18, das außerdem den Schritt eines Diskriminierens eines spontanen Drückens der Taste von einem wiederholten Drücken der Taste umfasst.

## Revendications

1. Dispositif (2) de saisie d'utilisateur à entrée tactile doté d'un premier mode dans lequel le dispositif (2) n'effectue pas une première fonction et d'un deuxième mode dans lequel le dispositif (2) effectue la première fonction, le dispositif (2) étant doté d'un moyen (8) de saisie d'utilisateur et étant agencé, lorsqu'il est dans le premier mode, pour déclencher la sortie du premier mode et l'entrée dans le deuxième mode lors du déclenchement d'une saisie d'utilisateur, la sortie du premier mode ayant lieu avant la discrimination de la saisie d'utilisateur.

2. Dispositif (2) de saisie d'utilisateur à entrée tactile selon la revendication 1, comportant un moyen (4) de détection servant à détecter le déclenchement d'une saisie d'utilisateur et un moyen (4) de commande servant à déclencher la sortie du premier mode.

3. Dispositif (2) de saisie d'utilisateur à entrée tactile selon la revendication 1 ou 2, le premier mode étant un mode d'économie d'énergie.

4. Dispositif (2) de saisie d'utilisateur à entrée tactile selon la revendication 1, 2 ou 3, le deuxième mode étant un mode de communication radio à faible puissance.

5. Dispositif (2) de saisie d'utilisateur à entrée tactile selon l'une quelconque des revendications précédentes, le moyen (8) de saisie d'utilisateur comportant une touche pouvant être pressée par l'utilisateur.

6. Dispositif (2) de saisie d'utilisateur à entrée tactile selon la revendication 5, comportant un moyen (4) de discrimination servant à distinguer une pression instantanée sur la touche d'une pression continue sur la touche.

7. Dispositif (2) de saisie d'utilisateur à entrée tactile selon la revendication 5, comportant un moyen (4) de discrimination servant à distinguer une pression instantanée sur la touche d'une pression répétitive sur la touche.

8. Dispositif (2) de saisie d'utilisateur à entrée tactile selon l'une quelconque des revendications précédentes, l'entrée dans le deuxième mode ayant lieu avant la discrimination de la saisie d'utilisateur.

9. Dispositif (2) de saisie d'utilisateur à entrée tactile selon l'une quelconque des revendications précédentes, comportant en outre un moyen (6) d'émetteur-récepteur radio de faible puissance, et la sortie du premier mode étant déclenchée en envoyant un message à l'aide du moyen (6) d'émetteur-récepteur radio de faible puissance.

10. Dispositif (2) de saisie d'utilisateur à entrée tactile selon l'une quelconque des revendications précédentes, comportant en outre un moyen (6) d'émetteur-récepteur radio de faible puissance, la première fonction comportant l'émission de données à l'aide du moyen (6) d'émetteur-récepteur radio de faible puissance.

11. Dispositif (2) de saisie d'utilisateur à entrée tactile selon l'une quelconque des revendications précédentes, fonctionnant comme un esclave dans un pico-réseau Bluetooth.

12. Dispositif (2) de saisie d'utilisateur à entrée tactile selon l'une quelconque des revendications précédentes, fonctionnant selon la norme Bluetooth, le premier mode étant le mode Sniff ou le mode Park.

13. Dispositif (2) de saisie d'utilisateur à entrée tactile selon la revendication 12, la sortie du mode Sniff étant déclenchée en émettant un message LMP_unsniff_req.

14. Dispositif (2) de saisie d'utilisateur à entrée tactile selon la revendication 12 ou 13, la sortie du mode Park étant déclenchée en émettant un message LMP_accepted.

15. Dispositif (2) de saisie d'utilisateur à entrée tactile selon l'une quelconque des revendications précédentes, fonctionnant selon la norme Bluetooth, le deuxième mode étant le mode actif.

16. Dispositif (2) de saisie d'utilisateur à entrée tactile selon l'une quelconque des revendications précédentes, le temps nécessaire pour sortir du premier mode et entrer dans le deuxième mode étant inférieur au temps nécessaire pour discriminer une saisie d'utilisateur.

17. Procédé de transfert d'un dispositif (2) de saisie d'utilisateur, en réaction à une saisie d'utilisateur, d'un premier mode dans lequel le dispositif (2) n'est pas capable d'effectuer une première fonction à un deuxième mode dans lequel le dispositif (2) est capable d'effectuer une première fonction, un retard inhérent existant dans le processus de transfert, comportant les étapes consistant à :
détecter le déclenchement de saisie d'utilisateur, puis déclencher immédiatement le transfert, en discriminant la saisie d'utilisateur après que le transfert du premier mode au deuxième mode a été déclenché.

18. Procédé selon la revendication 17, la saisie d'utilisateur étant effectuée par pression sur une touche pouvant être pressée par l'utilisateur.

19. Procédé selon la revendication 18, comportant en outre l'étape consistant à distinguer une pression instantanée sur la touche d'une pression continue sur la touche.

20. Procédé selon la revendication 18, comportant en outre l'étape consistant à distinguer une pression instantanée sur la touche d'une pression répétitive sur la touche.
